# EUROPEAN PATENT SPECIFICATION

(11) **EP 1 664 400 B1**
(45) Date of publication and mention of the grant of the patent: **17.08.2011**
(21) Application number: 04769368.4
(22) Date of filing: 24.08.2004
(51) Int. Cl.: D01F 6/30, D01D 5/42

(54) **Tape comprising a polyethylene copolymer**
Polyethylencopolymer enthaltendes Band
Ruban comprenant un copolymère de polyéthylène

(30) Priority: 03.09.2003 GB 0320690
(43) Date of publication of application: 07.06.2006
(73) Proprietor: INEOS Manufacturing Belgium NV, 2040 Antwerpen (BE)
(72) Inventor: JAN, Dominique, B-4052 Beaufays (BE); LAMBERT, Yves-Julien, B-1325 Chaumont Gistoux (BE)
(74) Representative: Smith, Julian Philip Howard
(86) International application number: PCT/IB2004/002979
(87) International publication number: WO 2005/021846

(56) References cited:
- EP-A- 0 262 783
- EP-A- 0 310 423
- EP-A- 1 469 104
- WO-A-93/24686
- GB-A- 1 553 425
- US-A- 4 504 432

## Description

The present invention relates to tapes of polyethylene, and more particularly to nets or webs made from such tapes.

There is a continuing desire to increase the strength of nets made from polyethylene tapes, ideally without increasing the weight as well: or alternatively to reduce the weight whilst maintaining strength. This is a particular issue for example in bale net wraps, which are large nets used to wrap bales of hay, and which are required to resist expansion of the hay when it is wet.

Current commercial polyethylenes used in the manufacture of tapes for nets include high density monomodal polyethylene copolymers containing 1-butene sold under the trade mark Eltex®, having a density of 944 kg/m³ and a melt index MI₅ of between 1.6 and 1.9 g/10min.

We have found that the strength of tapes made from similar resins can be increased without changing the weight by reducing the melt index. Accordingly in a first aspect the present invention provides a tape comprising a high density polyethylene polymer having a density of of 940 -965 kg/m³ and a melt index MI₅ of 0.8 -1.5 g/10mins which is a copolymer of ethylene and hexene. Preferably the polyethylene resin has a density of 940 -955 kg/m³ ; it preferably also has a melt index MI₅ of 1.1-1.4 g/10mins. It is preferred that the polyethylene is monomodal.

Preferred catalysts for making the polymer are Ziegler catalysts, although metallocene or chromium catalysts may be used.

The polymer may additionally contain the usual stabilizers and processing aids. For the resins of the invention having MI₅ values of 0.8 - 1.2 g/10mins, it is preferred that a processing aid is present. Examples of processing aids include fluoropolymers such as polyvinylidene fluoride.

During the manufacture of tapes, the polymer from which they are made is typically stretched following compounding. Whichever method of manufacture is used, it is preferred that the polymer has been stretched to at least 4 times its original length; typically from 6 to 10 times, and most preferably 7 to 8 times. Stretching further improves the tensile strength of the final product.

Usually, the polymer is formed into tapes which are then woven into nets. In a typical tape process the material is first compounded and then blown into a film. The film can be produced using well-known processes such as film blowing, film casting, coextrusion, cast film extrusion or lamination in the form of single-layer films, multilayer films or sheets. Multilayer systems can be produced by coextrusion, coating, extrusion coating, laminating or printing. The film is then stretched, and the stretched film cut into tapes which are woven or knitted into nets. This is known as the Lenzing process. In an alternative process (the Iso process), the blown film is cut into tapes prior to stretching.

In a typical production process, the polymer is fed into an extruder and extruded to form a film. Where a blown film is required, the polymer exits the extruder via a circular die, and the film is blown from a nozzle in the centre of the die. For flat films, the polymer exits the extruder via a flat die. Flat films are generally thicker than blown films. Typically the film is then stretched at this stage. Stretching is usually carried out in an oven or on a hot plate at a temperature of 100-110°C, at a stretch ratio preferably between 7 and 8 for blown films, and 4 to 6 for flat films. Optionally the stretched film may then be annealed. The film is then slit into tapes, which are knitted or woven into a net.

### EXAMPLES 1-5 (REFERENCE)

Hexane, ethylene, hydrogen, 1-butene, trialkylaluminium (30ppm) and a Ziegler-type catalyst such as disclosed in EP 703247 were introduced into a polymerisation reactor and the ethylene was polymerised at 83°C in a continuous slurry loop reactor having a production rate of 25kg/hr with an average residence time of 1.55 hours. Details of the reaction conditions are given in Table 1 below. The monomodal resins produced in the above reactions were then compounded with calcium stearate into granules, the properties of which are given in Table 2 below; Examples 1 and 5 have MI₅ values greater than 1.4, and are included as Comparative Examples.

In this specification the melt index MI₅ is measured in accordance with ASTM D-1238 at 190°C with a load of 5 kg. The density is measured in accordance with ISO 1183.

**TABLE 1 (REFERENCE)**

| EXAMPLE | 1 | 2 | 3 | 4 | 5 |
|---|---|---|---|---|---|
| Temp °C | 83.0 | 83.0 | 83.0 | 83.0 | 83.0 |
| [C₂] RTH g/kg | 16.1 | 16.7 | 17.1 | 17.0 | 16.0 |
| Productivity (Et) kg/h | 24.9 | 24.9 | 24.8 | 24.8 | 24.9 |
| [Al] Sv mg/kg | 30.0 | 30.0 | 30.0 | 30.0 | 30.1 |
| Residence time (hours) | 1.55 | 1.55 | 1.55 | 1.54 | 1.55 |
| H₂/C₂ %mol/mol | 3.8 | 3.3 | 3.3 | 3.5 | 3.9 |
| C₄/C₂ %mol/mol | 8.7 | 8.8 | 4.9 | 2.6 | 2.8 |

**TABLE 2 (REFERENCE)**

| EXAMPLE | 1 | 2 | 3 | 4 | 5 |
|---|---|---|---|---|---|
| MI₅ g/10min | 1.83 | 1.21 | 1.21 | 1.24 | 1.8 |
| Density kg/m³ | 944.7 | 943.6 | 947.5 | 950.8 | 950.9 |

The resins were then formed into tapes using the Iso process described above, during which film from which the tapes were cut was stretched either 7 or 8 times. The tapes were subjected to tensile strength tests in order to evaluate their suitability for use in applications such as nets.

**TABLE 3 (REFERENCE)**

| EXAMPLE | 1 | 2 | 3 | 4 | 5 |
|---|---|---|---|---|---|
| Stretched 7x | | | | | |
| Ave elongation % | 47.9 | 39.1 | 40.6 | 38.6 | 41.4 |
| Ave tenacity cN/Tex | 34.2 | 40.6 | 40.7 | 40.3 | 36.3 |
| Stretched 8x | | | | | |
| Ave elongation % | 35.0 | 32.8 | 34.1 | 33.1 | 34.3 |
| Ave tenacity cN/Tex | 44.6 | 51.3 | 49.4 | 49.4 | 45.6 |

It can be seen that the average tenacity of reference Examples 2-4 is significantly better than that of the two reference Examples with higher MI₅ values. It can also be seen that tapes which have been stretched 8 times are stronger than those which have been stretched 7 times. Comparing reference Examples 2-4 it can also be seen that resin density does not appear to have any influence on the strength of the tape.

## Claims

1. Tape comprising a polyethylene resin having a density of 940 -965 kg/m³ and a melt index MI₅ of 0.8 - 1.5 g/10mins, which is a copolymer of ethylene and hexene.

2. Tape according to claim 1 wherein the polyethylene resin has a density of 940 - 955 kg/m³.

3. Tape according to claim 1 or 2 wherein the polyethylene resin has a melt index MI₅ of 1.1 - 1.4 g/10mins.

4. Tape according to any preceding claim, wherein the polyethylene is monomodal.

5. Tape according to any preceding claim which additionally contains a processing aid.

6. Tape according to claim 7 wherein the processing aid comprises a fluoropolymer, preferably polyvinylidene fluoride.

7. Tape according to any preceding claim, which has been drawn to at least 4 times its original length.

8. Net or woven article formed from a tape as defined in any preceding claim.

## Patentansprüche

1. Band, umfassend ein Polyethylenharz mit einer Dichte von 940 bis 965 kg/m³ und einem Schmelzindex MI₅ von 0,8 bis 1,5 g/10 min, bei dem es sich um ein Copolymer von Ethylen und Hexen handelt.

2. Band gemäß Anspruch 1, wobei das Polyethylenharz eine Dichte von 940 bis 955 kg/m³ aufweist.

3. Band gemäß Anspruch 1 oder 2, wobei das Polyethylenharz einen Schmelzindex MI₅ von 1,1 bis 1,4 g/10 min aufweist.

4. Band gemäß einem der vorstehenden Ansprüche, wobei das Polyethylen monomodal ist.

5. Band gemäß einem der vorstehenden Ansprüche, das zusätzlich ein Verarbeitungshilfsmittel enthält.

6. Band gemäß Anspruch 7, wobei das Verarbeitungshilfsmittel ein Fluorpolymer, vorzugsweise Polyvinylidenfluorid, umfasst.

7. Band gemäß einem der vorstehenden Ansprüche, das auf wenigstens das Vierfache seiner ursprünglichen Länge gestreckt wurde.

8. Netz oder gewebter Artikel, gebildet aus einem Band gemäß einem der vorstehenden Ansprüche.

## Revendications

1. Bande comprenant une résine de polyéthylène ayant une masse volumique de 940 à 965 kg/m³ et un indice de fluage MI₅ de 0,8 à 1,5 g/10 min, qui est un copolymère d'éthylène et d'hexène.

2. Bande selon la revendication 1, dans laquelle la résine de polyéthylène a une masse volumique de 940 à 955 kg/m³.

3. Bande selon la revendication 1 ou 2, dans laquelle la résine de polyéthylène a un indice de fluage MI₅ de 1,1 à 1,4 g/10 min.

4. Bande selon l'une quelconque des revendications précédentes, dans laquelle le polyéthylène est monomodal.

5. Bande selon l'une quelconque des revendications précédentes, qui contient de plus un auxiliaire de mise en oeuvre.

6. Bande selon la revendication 7, dans laquelle l'auxiliaire de mise en oeuvre comprend un polymère fluoré, de préférence du poly(fluorure de vinylidène).

7. Bande selon l'une quelconque des revendications précédentes, qui a été étirée à au moins 4 fois de sa longueur originale.

8. Filet ou article tissé formé à partir d'une bande telle que définie dans l'une quelconque des revendications précédentes.
